# EUROPÄISCHE PATENTSCHRIFT

(11) **EP 3 653 359 B1**
(45) Veröffentlichungstag und Bekanntmachung des Hinweises auf die Patenterteilung: **05.10.2022**
(21) Anmeldenummer: 19218753.2
(22) Anmeldetag: 11.03.2014
(51) Int. Cl.: B29C 45/16, B29C 45/26

(54) **SPRITZGIESSVORRICHTUNG MIT DREHBAREM MITTELTEIL UND MITTELTEIL**
REINJECTION MOULDING DEVICE HAVING A ROTATABLE CENTRE PART AND CENTRE PART
DISPOSITIF DE MOULAGE PAR INJECTION DOTÉ D'UNE PIÈCE CENTRALE ROTATIVE ET PIECE CENTRALE

(30) Priorität: 15.03.2013 CH 6132013; 13.12.2013 CH 20622013
(43) Veröffentlichungstag der Anmeldung: 20.05.2020
(62) Teilanmeldung aus: 14709293.6
(73) Patentinhaber: Foboha (Germany) GmbH, 77716 Haslach (DE)
(72) Erfinder: ARMBRUSTER, Rainer, 77709 Wolfach (DE)
(74) Vertreter: Rentsch Partner AG

(56) Entgegenhaltungen:
- WO-A1-2007/082394
- WO-A1-2011/107395
- CH-A2- 705 140
- JP-A- H02 171 221

## Beschreibung

Die vorliegende Erfindung liegt auf dem Gebiet der Werkzeuge und Maschinen zum Spritzgiessen von Kunststoff und anderen thermoplastischen Materialien.

Aus dem Stand der Technik sind Spritzgiessvorrichtungen mit einem oder mehreren drehenden Mittelteilen bekannt. Diese werden zur effizienten Herstellung von mehrkomponentigen Kunststoffteilen durch Spritzgiessen verwendet. Zwischen zwei entlang von Holmen gegeneinander in einer ersten Richtung verfahrbaren Formhälften ist mindestens ein drehbares Formmittelteil (Mittelblock) angeordnet, das an einer Haltevorrichtung befestigt und um eine Drehachse drehbar angeordnet ist. Das drehbare Formmittelteil weist mindestens zwei parallele Seitenflächen auf, entlang derer es mit den beiden Formhälften zur Bildung von Kavitäten zusammenwirkt. In gewissen Ausführungsformen kann der drehbare Formmittelteil zumindest auf einer Seite mit einem weiteren drehbaren Formmittelteil zusammenwirken. Koordinationsmittel bewirken, dass der drehbare Formmittelteil beim Öffnen und beim Schliessen mittig zwischen den beiden Formhälften positioniert bleibt und so Kollisionen vermieden werden. Aus dem Stand der Technik sind diverse Haltevorrichtungen für den drehbaren Mittelteil bekannt.

EP1035959 und EP1155802 derselben Anmelderin wurden 1999 publiziert und betreffen beide eine Haltevorrichtung für ein drehbares Mittelteil (Form, Formhälfte, Formträger). Die Haltevorrichtung weist eine untere und eine obere Traverse auf, welche entlang der Holme einer Spritzgiessmaschine geführt sind. Jede Traverse der Haltevorrichtung weist ein drehbares Haltemittel auf, welches zum lösbaren Einspannen der Form, Formhälfte oder des Formträgers dazwischen dient.

EP1725386 derselben Anmelderin wurde 2005 publiziert und betrifft ein Verfahren und eine Spritzgiessvorrichtung mit mehr als einem drehbaren Mittelteil. Damit besteht die Möglichkeit, Teile in zwei äusseren Trennebenen herzustellen und diese in einem weiteren Verarbeitungsschritt in einer weiteren Trennebene zu montieren. In den Figuren sind unterschiedliche Ausgestaltungen von Haltevorrichtungen für die drehbaren Mittelteile dargestellt.

WO2011/107395 derselben Anmelderin wurde 2011 publiziert und beschreibt eine Haltevorrichtung mit modularem Aufbau, welche flexibel auf unterschiedliche Spritzgiessmaschinen angepasst werden kann. Es werden unterschiedliche Arten der Halterung beschrieben.

EP1119449 von der Fa. Krauss Maffei wurde 2001 erstmals publiziert und zeigt eine Zweiplatten-Horizontalspritzgiessmaschine. Diese weist eine auf dem Maschinenbett gelagerte Haltevorrichtung für einen drehbaren Mittelteil auf. Die Erfindung besteht darin, dass die Haltevorrichtung komplett von den Holmen losgelöst und mit diesen keine Wirkverbindung aufweist. Alle auftretenden Kräfte werden über das Maschinenbett übertragen.

Eine Aufgabe der Erfindung besteht darin, die aus dem Stand der Technik bekannten Spritzgiessvorrichtungen bezüglich ihrer Effizienz weiter zu verbessern.

Um die Produktionskapazität zu steigern ist die Reduktion der Zykluszeit ein taugliches Mittel. Allerdings treten bei den damit einhergehenden höheren Verarbeitungsgeschwindigkeiten auch höhere Kräfte auf, da die Maschinenteile stärker beschleunigt und abgebremst werden müssen, damit sie mit dem Maschinentakt Schritt halten können. Die optimale Einleitung und Übertragung der Kräfte ist ein wichtiger Aspekt, um die Robustheit und die Langlebigkeit der Vorrichtung garantieren zu können. Sich negativ auswirkende Zwangskräfte sind zu vermeiden. Ein Aspekt der Erfindung besteht darin, die Kräfte und deren Fluss gezielt auf mehrere Maschinenelemente optimal aufzuteilen. Dabei werden die Gewichtslasten und die Drehmomente, welche zwischen einem drehbaren Formmittelteil (Mittelblock), bzw. einer Haltevorrichtung für diesen, und einer Spritzgiessmaschine teilweise oder ganz getrennt übertragen. Ein weiterer Aspekt zur Optimierung besteht in der gezielten Gewichtsreduktion gewisser Teile.

Eine Haltevorrichtung kann unterschiedlich ausgestaltet sein. In einer bevorzugten Ausführungsform weist die Vorrichtung mindestens eine auf einem Maschinenbett der Spritzgiessmaschine abgestützte und in Längsrichtung von Holmen der Spritzgiessmaschine verschiebbare Basis (untere Haltevorrichtung) auf.

Eine Variante umfasst eine Haltevorrichtung für einen um eine vertikale Achse drehbaren Formmittelteil in einer Spritzgiessmaschine. Die Haltevorrichtung weist einen um eine Drehachse drehbaren und über einen Motor angetriebenen unteren Drehteller auf, der zur Aufnahme, bzw. Halterung des drehbaren Formmittelteils (Mittelblock) dient. Bei Bedarf können mehrere Haltevorrichtungen hintereinander angeordnet sein. Der untere Drehteller ist gegenüber einer unteren Traverse um eine vertikale Achse drehbar angeordnet. Die untere Traverse ist über erste Lagerblöcke und auf einem Maschinenbett der Spritzgiessmaschine abgestützte Führungsschienen in Längsrichtung der Spritzgiessmaschine verschiebbar gelagert.

Die Haltevorrichtung kann zweite Lagerblöcke aufweisen, mittels denen die untere Traverse in Umfangsrichtung gegenüber einem unteren Paar von Holmen der Spritzgiessmaschine in Umfangsrichtung abgestützt ist. Zur Vermeidung von negativen Kräften gegenüber den Holmen können die zweiten Lagerblöcke gegenüber der unteren Traverse zumindest in vertikaler Richtung schwimmend gelagert sein. Alternativ oder in Ergänzung können die zweiten Lagerblöcke gegenüber der unteren Traverse justierbar angeordnet sein. Je nach Anwendungsgebiet können die zweiten Lagerblöcke mit den ersten Lagerblöcken eine Einheit bilden. Die zweiten Lagerblöcke können die Holme zumindest teilweise von innen nach aussen umgreifen. Die zweiten Lagerblöcke sind mit Vorteil paarweise an einem Holm angeordnet. Falls die Kräfte eine gewisse Höhe nicht übersteigen, können die zweiten Lagerblöcke auch diagonal bezüglich der Traverse angeordnet sein. Für eine gute Übertragung der Kräfte sind die zweiten Lagerblöcke entlang der Holme in einem Abstand zueinander angeordnet. Um eine vom Aufbau her flexible Anordnung zu erreichen, kann mindestens ein zweiter Lagerblock über einen Adapter mit der Traverse von einer Seite und/oder von oben wirkverbunden sein. Die Traverse ist mit Vorteil mehrteilig ausgestaltet, so dass sie flexibel den Umständen angepasst werden kann. Sie kann ein Mittelteil und eines oder mehrere an diesen befestigte Seitenteile aufweisen. Die zweiten Lagerblöcke werden in der Regel am Mittelteil und oder mindestens an einem der Seitenteile befestigt. Mit Vorteil wird auf kurze Lastwege geachtet. Die zweiten Lagerblöcke dienen primär zur Übertragung der Reaktionskräfte, welche aufgrund des Antriebsmomentes auftreten. Gewichtskräfte werden bevorzugt über die ersten Lagerblöcke auf das Maschinenbett übertragen.

Die Traverse kann in gewissen Fällen auch als (flächige) Grundplatte ausgestaltet sein. Mindestens ein zweiter Lagerblock kann auf oder seitlich an der Grundplatte angeordnet sein. Mindestens ein zweiter Lagerblock kann lösbar mit der Traverse wirkverbunden sein.

Zur Effizienzsteigerung durch Gewichtsreduktion und Reduktion der auftretenden Kräfte sieht die Erfindung einen speziell gestalteten Mittelblock vor, welcher einen Grundkörper und mindestens eine an diesem befestigte untere Kupplungsplatte aufweist. Der Grundkörper wird dabei aus einem Material mit geringerer Dichte hergestellt, als die untere Kupplungsplatte. Z.B. kann der Grundkörper aus Aluminium oder einem anderen Leichtmetall und die mindestens eine Kupplungsplatte aus Werkzeugstahl hergestellt werden. Je nach Ausgestaltung der Haltevorrichtung kann der Mittelblock auch eine obere Kupplungsplatte aufweisen. Weitere Varianten und konstruktive Details sind in den Figuren und der dazugehörigen Beschreibung zu finden. In einer Ausführungsform weist die mindestens eine Kupplungsplatte mindestens eine Sammelleitung auf, welche mindestens einen im Bereich der Kupplungsplatte angeordneten Anschluss (z.B. in Form einer selbstverschliessenden Schnellkupplung) für Medien wie beispielsweise Wasser, Pressluft und/oder Hydraulik mit mindestens einer im Grundkörper verlaufenden Medienverteilung (Steigleitung) wirkverbindet. Der Anschluss kann am Grundkörper oder an der Kupplungsplatte angeordnet sein. Der hier beschriebene erfindungsgemässe Mittelblock kann auch mit anderen Halterungen, bzw. Spritzgiessmaschinen verwendet werden, welche hier nicht beschrieben werden. Aus diesem Grund behält sich die Anmelderin vor, diese Erfindung in einer oder mehreren Teilanmeldungen separat weiter zu verfolgen.

Der Grundkörper des Mittelblockes kann mittels einem 3D-Druckverfahren hergestellt werden. Dies weist den Vorteil auf, dass das Innenleben und insbesondere die Medienleitungen flexibel gestaltet und optimal geführt werden können. Dies resultiert in einer optimierten Gewichtsverteilung und in einer verbesserten Kühlung. Weiterhin kann der Grundkörper Hohlräume aufweisen, welche zur Gewichtsreduktion beitragen. Bei konventionell hergestellten Grundkörpern ist das so nicht möglich. Alternativ oder in Ergänzung können gezielt Verstärkungen (nicht dargestellt) eingelegt oder eingebracht werden. Nach dem Härten, bzw. Tempern des gedruckten Materials können die Seitenfläche, bzw. die Anschlussflächen bei Bedarf mechanisch nachbearbeitet werden.

Anhand der in den nachfolgenden Figuren gezeigten Ausführungsbeispiele und der dazugehörigen Beschreibung werden Aspekte der Erfindung näher erläutert. Es zeigen:
- Fig. 1: eine Spritzgiessvorrichtung in einer perspektivischen Darstellung;
- Fig. 2: einen Mittelblock in einer perspektivischen Darstellung;
- Fig. 3: den Mittelblock gemäss Figur 2 in einer Seitenansicht;
- Fig. 4: den Mittelblock gemäss Figur 2 in einer Draufsicht.

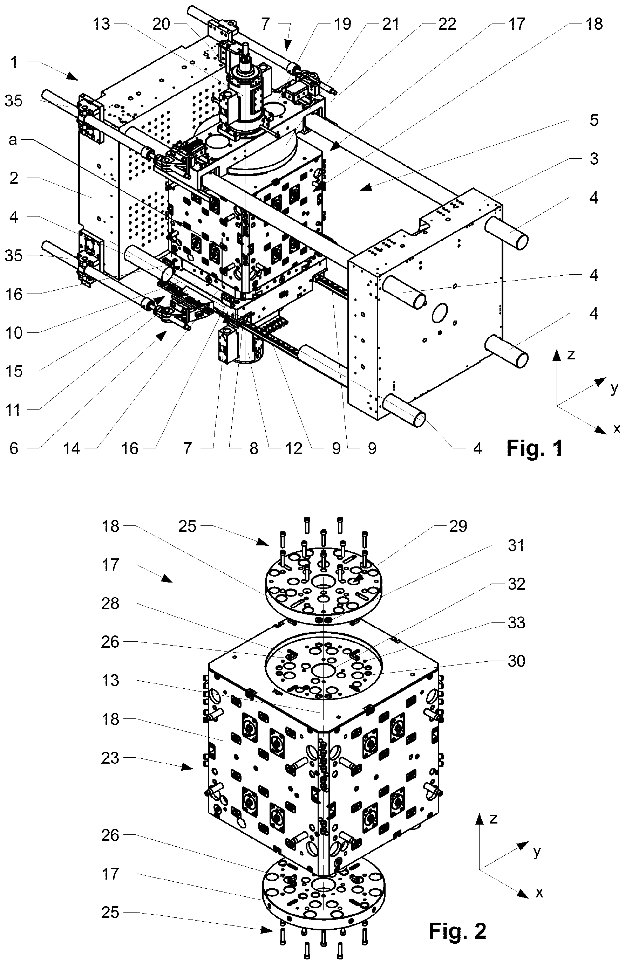

**Figur 1** zeigt eine erfindungsgemässe Spritzgiessvorrichtung 1 in einer perspektivischen Darstellung von schräg vorne und oben. **Figur 2** zeigt einen Mittelblock 17, wie er z.B. in der Spritzgiessvorrichtung 1 gemäss **Figur 1** zum Einsatz kommt.

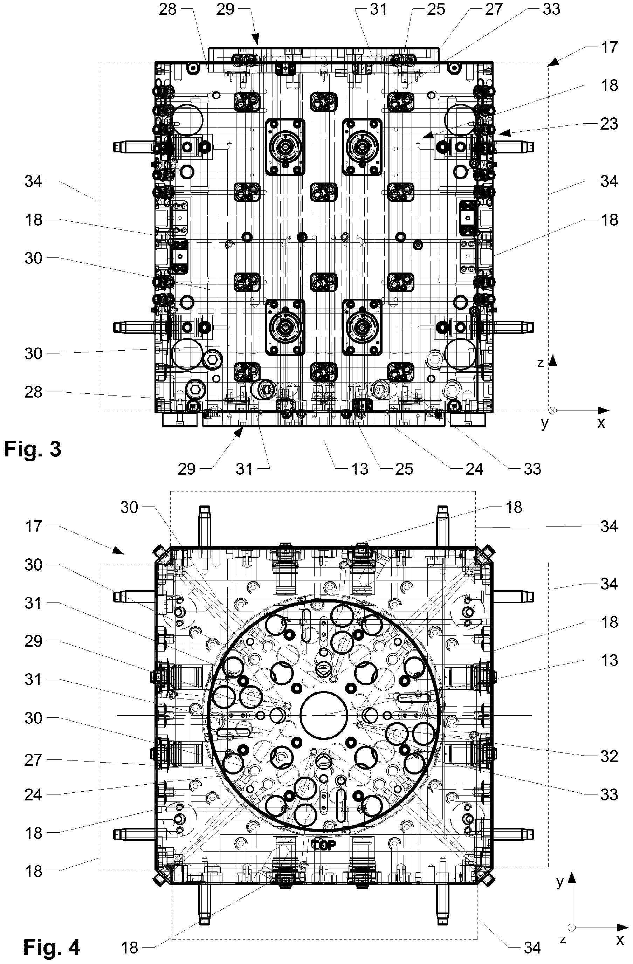

**Figur 3** zeigt den Mittelblock 17 in einer Darstellung von der Seite und **Figur 4** in einer Draufsicht.

Die Spritzgiessvorrichtung 1 weist eine erste Formaufspannplatte 2 und eine bezüglich dieser verschiebbare zweite Formaufspannplatte 3 auf. Die Formaufspannplatten 2, 3 dienen zum Aufspannen von ersten und zweiten Formhälften einer Spritzgiessform (nicht näher dargestellt). Die Formaufspannplatten 2, 3 sind entlang von Längsführungen, hier in Form von Holmen 4 der Spritzgiessvorrichtung 1 in einer ersten Richtung (x-Richtung) verschiebbar zueinander angeordnet. Je nach Anwendungsgebiet und Hersteller der Spritzgiessvorrichtung sind andere Typen von Längsführungen möglich. Zwischen den beiden Formaufspannplatten 2, 3 ist eine Haltevorrichtung 5 zu erkennen. Diese weist eine untere Haltevorrichtung 6 auf, welche in der gezeigten Ausführungsform eine untere Traverse 11 umfasst, die in Richtung der Holme 4 (x-Richtung) verschiebbar angeordnet ist. Die untere Traverse 11 ist über erste Lagerblöcke 8 auf einem Schienesystem 9 auf einem Maschinenbett (nicht näher dargestellt) der Spritzgiessvorrichtung 1 in vertikaler Richtung abgestützt. Damit der Aufbau der unteren Traverse 7 und ihre Abstützung auf dem Führungsschiene 9 besser ersichtlich sind, ist der untere vordere Holm 4 teilweise geschnitten dargestellt (der Verlauf des geschnittenen Holmes ist durch eine gestrichelte Linie 10 dargestellt).

Die untere Haltevorrichtung 6, bzw. die Traverse 7 besteht aus einer Grundplatte 11, an welcher ein unteres Drehsystem 12 befestigt ist. Das untere Drehsystem 12 weist einen um eine hier vertikal angeordnete Drehachse 13 drehbaren unteren Drehteller 14 auf, der in der gezeigten Ausführungsform eine rechteckige Ausgestaltung aufweist. Der untere Drehteller 14 ist durch einen Motor 15 angetrieben, der hier unterhalb der Grundplatte 11 angeordnet und damit in der gezeigten Darstellung nicht ersichtlich ist.

Wie in **Figur 1** ersichtlich, sind bei Bedarf an der Grundplatte 11 weitere zweite Lagerblöcke 16 angebracht, welche mit den unteren Holmen 4 in y-Richtung in Wirkverbindung stehen und zumindest zur teilweisen Abstützung des durch den Motor 15 erzeugten und auf die Grundplatte 11 wirkenden Drehmomentes gegenüber den Holmen 4 dienen. Diese Anordnung weist den Vorteil auf, dass die Führungsschienen 9 und die erste Lagerblöcke 8 weitgehend vom Drehmoment des Motors 15 entlastet werden können. Die ersten Lagerblöcke 8 sind mit Vorteil möglichst weit von der Drehachse 13 bzw. voneinander (vgl. Abstand a) entfernt angeordnet, damit sie aufgrund des grösseren Hebelarmes eine bessere Wirkung entfalten. Vorteile der gezeigten Anordnung bestehen darin, dass der untere Drehteller 14 schneller gedreht und damit die Produktionsgeschwindigkeit reduziert werden kann.

Auf dem unteren Drehteller 14 ist ein Mittelblock 17 angeordnet. Dieser weist Seitenflächen 18 auf, welche zur Aufnahme von je paarweise einander gegenüberliegenden inneren Formhälften 34 (vgl. **Figuren 3** und **4****,** schematisch durch gestrichelte Linien dargestellt) dienen. Diese wirken mit korrespondierend ausgestalteten ersten und zweiten äusseren Formhälften (nicht dargestellt) zusammen, welche an der ersten und der zweiten Formaufspannplatte 2, 3 befestigt werden. Der Aufbau des Mittelblockes 17 wird nachfolgend näher erläutert.

In der gezeigten Ausführungsform weist die Haltevorrichtung 5 zusätzlich zur unteren auch eine obere Haltevorrichtung 7auf. An dieser ist eine obere Traverse 19 mit einem oberen Drehsystem 20, sowie einem oberen Drehteller 21 befestigt. Zwischen den beiden Drehtellern 14, 21 ist der Mittelblock 17 um die Drehachse 13 drehbar angeordnet. Die obere Traverse 19 weist eine jochförmige Ausgestaltung auf und sitzt auf den oberen beiden Holmen 4. An den Enden sind dritte Lagerblöcke 22 angeordnet, welche die oberen Holmen 4 im montierten Zustand zumindest teilweise umgreifen können. Die obere Traverse 19 ist synchron mit der unteren Traverse 7 entlang der Holmen 4 verschiebbar. Der Antrieb erfolgt über einen Linearantrieb 35, der hier aus vier Hydraulikzylindern besteht. Andere, z.B. elektrische Antriebe sind möglich.

Insbesondere durch die Kombination der speziellen Ausgestaltung der unteren Haltevorrichtung 6, sowie des erfindungsgemässen Mittelblockes 17 weist die gezeigte Haltevorrichtung 5 den Vorteil auf, dass die obere Traverse 19, bzw. das obere Drehsystem 20 im Prinzip weggelassen oder bei Bedarf flexibel dazu kombiniert werden können.

**Figur 2** zeigt den Mittelblock 17 in einer Explosionsdarstellung (Zerlegung in z-Richtung) von schräg oben. **Figur 3** zeigt den Mittelblock 17 in einer Seitenansicht und **Figur 4** in einer Draufsicht. In **Figur 4** sind die verdeckten Linien gestrichelt dargestellt.

Der Mittelblock 17 weist einen Grundkörper 23, sowie mindestens eine untere Kupplungsplatte 24 auf. Diese ist mittels Schrauben 25 und diesen zugeordneten mit Gewinden versehenen Sacklöchern 33 an der Unterseite des Grundkörpers 23 befestigt. Falls erforderlich können mit Bezug auf die Drehachse 13 in Umfangsrichtung wirkende Passfedern 26 zur Übertragung der Kräfte vorgesehen werden.

Der Grundkörper 23 ist mit Vorteil aus einem Material mit geringerer Dichte hergestellt als die untere Kupplungsplatte 24. Gute Resultate werden erzielt, wenn der Grundkörper 23 aus Aluminium oder einem anderen Leichtmetall (z.B. einer Magnesiumlegierung) hergestellt wird. Die während dem Betrieb an den Seitenflächen 18 befestigten Formhälften 35 (schematisch dargestellt durch gestrichelte Linien) werden aus einem für den jeweiligen Spritzgiessherstellungsprozess geeigneten Material gefertigt. In der Regel kommt ein Werkzeugstahl zum Einsatz. Andere Materialien sind möglich. Die untere Kupplungsplatte 24 stellt im Betrieb die Wirkverbindung zwischen dem Mittelblock 17 und dem unteren Drehteller 14 her und wird mit Vorteil aus einem abriebfesten und strapazierfähigen Material, z.B. Werkzeugstahl, hergestellt.

Durch die geringere Dichte des Materials des Grundkörpers 23 wird das auf die Haltevorrichtung 5 wirkende Gewicht reduziert, sowie das um die Drehachse 13 wirkende Massenträgheitsmoment reduziert. Daraus resultieren die Vorteile, dass die Haltevorrichtung 5 (vgl. **Figur 1**) entlastet wird und dass im Vergleich zu herkömmlichen Vorrichtungen schneller gedreht werden kann.

In einer Variante wird der Grundkörper 23 mittels einem 3D-Druckverfahren von einem geeigneten Material hergestellt. Dies weist den Vorteil auf, dass das Innenleben und insbesondere die Medienleitungen flexibel gestaltet und optimal geführt werden können. Dies resultiert in einer optimierten Gewichtsverteilung und in einer verbesserten Kühlung. Weiterhin kann der Grundkörper 23 Hohlräume aufweisen, welche zur Gewichtsreduktion beitragen. Bei konventionell hergestellten Grundkörpern 23 ist das so nicht möglich. Alternativ oder in Ergänzung können gezielt Verstärkungen (nicht dargestellt) eingelegt oder eingebracht werden.

Nach dem Härten, bzw. Tempern des gedruckten Materials können die Seitenfläche, bzw. die Anschlussflächen bei Bedarf mechanisch nachbearbeitet werden.

In der gezeigten Ausführungsform weist der Mittelblock 17 zusätzlich eine obere Kupplungsplatte 27 auf, welche auf der Oberseite des Grundkörpers 23 mittels Schrauben 25 befestigt wird. Zur Verbesserung der mechanischen Kopplung können auch hier Passfedern 26 zum Einsatz kommen. Sowohl die untere als auch die obere Kupplungsplatte 24, 27 können in dafür vorgesehene Ausnehmungen 28 in der Unterseite, bzw. der Oberseite des Grundkörpers 23, teilweise eingelassen angeordnet sein. Im Bereich der unteren und/oder falls vorhanden der oberen Kupplungsplatte 24, 27 können einen oder mehrere Anschlüsse 29, z.B. in Form von Schnellkupplungen (nicht näher dargestellt) zur Medienübergabe zwischen der Haltevorrichtung 5 und dem Grundkörper 23 aufweisen. Die Anschlüsse können an zumindest einer der Kupplungsplatten 24, 27 angebracht sein. Die Kupplungsplatten 24, 27 können eine Wirkverbindung zwischen dem mindestens einen Anschluss und im Innern des Grundkörpers 23 verlaufenden Medienleitungen herstellen. Als Medienleitungen 30 dienen in der Regel mehrere in unterschiedlichen Richtungen im Innern des Grundkörpers 23 verlaufende, miteinander in Wirkverbindung stehende Bohrungen 30. Mindestens eine der Kupplungsplatten 24, 27 kann eine Sammelfunktion für mehrere Medienleitungen 30 übernehmen. Zu diesem Zweck kann die mindestens eine Kupplungsplatte 24, 27 eine oder mehrere Sammelleitungen 31 aufweisen, welche einen oder mehrere Anschlüsse 29 mit einer oder mehreren Medienleitungen 30 wirkverbindet. In der Regel handelt es sich bei den Sammelleitungen 31 um Bohrungen, welche quer zur Drehachse 13 innerhalb der unteren, bzw. der oberen Kupplungsplatte 24, 27 verlaufen. Sie werden an der Seitenfläche der entsprechenden Kupplungsplatte 24, 27, z.B. mit einem Stopfen fest oder lösbar verschlossen. Bei Bedarf können die mindestens eine Kupplungsplatte 24, 27 mehrteilig ausgestaltet sein. Zur Gewichtsreduktion kann der Grundkörper 23 im Innern Hohlräume aufweisen. Z.B. besteht die Möglichkeit, eine oder mehrere in axialer Richtung verlaufende Aussparungen 32 anzubringen, welche zur Gewichtsreduktion beitragen. Bei Bedarf können die Aussparungen 32 für weitere Zwecke, z.B. zur Durchführung von Leitungen für Medien, usw. verwendet werden. Bei Bedarf kann zumindest eine der Kupplungsplatten 24, 27 durch ein 3D-Druckverfahren von einem geeigneten Material hergestellt werden. Weitere Behandlungsschritte sind möglich.

### LISTE DER BEZUGSZEICHEN

- a: Abstand zwischen zweiten Lagerblöcken
- 1: Spritzgiessvorrichtung
- 2: erste Formaufspannplatte
- 3: zweite Formaufspannplatte
- 4: Holm (Längsführung)
- 5: Haltevorrichtung
- 6: Untere Haltevorrichtung
- 7: Obere Haltevorrichtung
- 8: Erste Lagerblöcke
- 9: Führungsschiene
- 10: Gestrichelte Linie (Holm)
- 11: Grundplatte (untere Traverse)
- 12: Unteres Drehsystem
- 13: Drehachse
- 14: Unterer Drehteller
- 15: Motor (unterer Drehteller)
- 16: Zweite Lagerblöcke
- 17: Mittelblock (Formmittelteil)
- 18: Seitenflächen
- 19: Obere Traverse
- 20: Oberes Drehsystem
- 21: Oberer Drehteller
- 22: Dritte Lagerblöcke
- 23: Grundkörper (Mittelblock 17)
- 24: untere Kupplungsplatte
- 25: Schraube
- 26: Passfeder
- 27: obere Kupplungsplatte
- 28: Ausnehmung
- 29: Anschluss (Schnellkupplung)
- 30: Medienleitung
- 31: Sammelleitung
- 32: Aussparung
- 33: Sackloch
- 34: Formhälften (Mittelblock)
- 35: Linearantrieb

## Patentansprüche

1. Mittelblock (17) zur Verwendung in einer Spritzgiessvorrichtung (1) welche eine Haltevorrichtung (5) für den Mittelblock (17) aufweist, wobei die Haltevorrichtung einen um eine Drehachse (13) drehbaren und über einen Motor (15) angetriebenen unteren Drehteller (14), der zur Halterung des um die Drehachse (13) drehbar angeordnet Mittelblockes (17) dient, und einer unteren Traverse (7), welche über erste Lagerblöcke (8) und Führungsschienen (9) auf einem Maschinenbett einer Spritzgiessmaschine abgestützt in Längsrichtung (x) verschiebbar gelagert ist, aufweist,
der Mittelblock (17) umfassend einen Grundkörper (23) und eine an diesem befestigte untere Kupplungsplatte (24), wobei der Grundkörper (23) aus einem Material mit geringerer Dichte hergestellt ist als die untere Kupplungsplatte (24).

2. Mittelblock (17) gemäss Patentanspruch 1, **dadurch gekennzeichnet, dass** der Mittelblock (17) eine obere Kupplungsplatte (27) aufweist.

3. Mittelblock (17) gemäss einem der vorangehenden Patentansprüche, **dadurch gekennzeichnet, dass** die mindestens eine Kupplungsplatte (24, 27) mindestens eine Sammelleitung (31) aufweist, welche mindestens einen Anschluss (29) mit mindestens einer im Grundkörper (23) verlaufenden Medienverteilung (30) wirkverbindet.

4. Mittelblock (17) gemäss einem der vorangehenden Patentansprüche, **dadurch gekennzeichnet, dass** der Grundkörper (23) aus einem Leichtmetall, insbesondere Aluminium, und die mindestens eine Kupplungsplatte (24, 27) aus Werkzeugstahl hergestellt sind.

5. Mittelblock (17) gemäss einem der vorangehenden Patentansprüche, **dadurch gekennzeichnet, dass** der Grundkörper (23) des Mittelblockes (17) mittels einem 3D-Druckverfahren hergestellt ist.

6. Mittelblock (17) gemäss Patentanspruch 5, **dadurch gekennzeichnet, dass** der Grundkörper (23) Hohlräume aufweist, welche zur Gewichtsreduktion beitragen.

7. Mittelblock (17) gemäss Patentanspruch 5 oder 6, **dadurch gekennzeichnet, dass** in den Grundkörper (23) der Verstärkungen eingelegt oder eingebracht werden.

8. Mittelblock (17) gemäss einem der vorangehenden Patentansprüche, **dadurch gekennzeichnet, dass** die untere Kupplungsplatten (24) und/oder die obere Kupplungsplatte (27) durch ein 3D-Druckverfahren hergestellt ist.

9. Mittelblock (17) gemäss einem der vorangehenden Patentansprüche, **dadurch gekennzeichnet, dass** die die untere Kupplungsplatte (24) und die obere Kupplungsplatte (27) in für diese vorgesehene Ausnehmungen (28) in einer Unterseite, bzw. einer Oberseite des Grundkörpers (23), teilweise eingelassen angeordnet sind.

10. Mittelblock (17) gemäss Patentanspruch einem der vorangehenden Patentansprüche, **dadurch gekennzeichnet, dass** die untere Kupplungsplatte (24) und/oder die obere Kupplungsplatte (27) eine oder mehrere Sammelleitungen (31) aufweist, welche einen oder mehrere Anschlüsse (29) mit einer oder mehreren Medienleitungen (30) wirkverbindet.

11. Mittelblock (17) gemäss Patentanspruch 10, **dadurch gekennzeichnet, dass** der eine oder die mehreren Anschlüsse (29) Schnellkupplungen sind.

12. Spritzgiessvorrichtung (1) mit einem drehbaren Mittelblock (17) gemäss einem der vorangehenden Patentansprüche und einer Haltevorrichtung (5) für den drehbaren Mittelblock (17) mit einem um eine Drehachse (13) drehbaren und über einen Motor (15) angetriebenen unteren Drehteller (14), der zur Halterung des drehbaren Mittelblockes (17) dient, einer unteren Traverse (7), welche über erste Lagerblöcke (8) und Führungsschienen (9) auf einem Maschinenbett einer Spritzgiessmaschine abgestützt in Längsrichtung (x) verschiebbar gelagert ist.

## Claims

1. Central block (17) for use in an injection moulding device (1) which comprises a holding device (5) for the central block (17), wherein the holding device (5) comprises a lower turntable (14), which is rotatable about an axis of rotation (13), is driven by way of a motor (15) and serves for holding the central block (17) which is arranged so as to be rotatable about the axis of rotation (13), and a lower cross member (7), which is mounted displaceably in the longitudinal direction (x), supported by way of first bearing blocks (8) and guide rails (9) on a machine bed of an injection moulding machine,
the central block (17) including a main body (23) and a lower coupling plate (24) which is fastened thereto, wherein the main body (23) is produced from a material with a lower density than the lower coupling plate (24).

2. Central block (17) according to Patent Claim 1, **characterized in that** the central block (17) comprises an upper coupling plate (27).

3. Central block (17) according to one of the preceding patent claims, **characterized in that** the at least one coupling plate (24, 27) comprises at least one collecting line (31), which operatively connects at least one connection (29) to at least one media line (30) running in the main body (23).

4. Central block (17) according to one of the preceding patent claims, **characterized in that** the main body (23) is produced from a light metal, in particular aluminium, and the at least one coupling plate (24, 27) is produced from tool steel.

5. Central block (17) according to one of the preceding patent claims, **characterized in that** the main body (23) of the central block (17) is produced by means of a 3D printing process.

6. Central block (17) according to Patent Claim 5, **characterized in that** the main body (23) comprises cavities, which contribute to the weight reduction.

7. Central block (17) according to Patent Claim 5 or 6, **characterized in that** the reinforcing elements are inserted or introduced into the main body (23).

8. Central block (17) according to one of the preceding patent claims, **characterized in that** the lower coupling plate (24) and/or the upper coupling plate (27) are/is produced by a 3D printing process.

9. Central block (17) according to one of the preceding patent claims, **characterized in that** the lower coupling plate (24) and the upper coupling plate (27) are arranged partially recessed into recesses (28) provided therefor in a lower side and an upper side, respectively, of the main body (23).

10. Central block (17) according to one of the preceding patent claims, **characterized in that** the lower coupling plate (24) and/or the upper coupling plate (27) comprise/comprises one or more collecting lines (31), which operatively connects/connect one or more connections (29) to one or more media lines (30).

11. Central block (17) according to Patent Claim 10, **characterized in that** the one or more connections (29) are quick-action couplings.

12. Injection moulding device (1) having a rotatable central block (17) according to one of the preceding patent claims and a holding device (5) for the rotatable central block (17) with a lower turntable (14), which is rotatable about an axis of rotation (13), is driven by way of a motor (15) and serves for holding the rotatable central block (17), and a lower cross member (7), which is mounted displaceably in the longitudinal direction (x), supported by way of first bearing blocks (8) and guide rails (9) on a machine bed of an injection moulding machine.

## Revendications

1. Bloc central (17) destiné à être utilisé dans un dispositif de moulage par injection (1), lequel comprend un dispositif de support (5) pour le bloc central (17), le dispositif de support (5) comprenant un plateau rotatif inférieur (14) pouvant tourner autour d'un axe de rotation (13) et entraîné par un moteur (15), lequel plateau rotatif est destiné à supporter le bloc central (17) disposé de manière à pouvoir tourner autour de l'axe de rotation (13), et une traverse inférieure (7), laquelle est montée de façon déplaçable en direction longitudinale (x) en étant supportée par des premiers blocs de palier (8) et des rails de guidage (9) sur un bâti de machine d'une machine de moulage par injection,
le bloc central (17) comportant un corps de base (23) et une plaque d'accouplement inférieure (24) fixée à celui-ci, le corps de base (23) étant fabriqué à partir d'un matériau de plus faible densité que la plaque d'accouplement inférieure (24).

2. Bloc central (17) selon la revendication 1, **caractérisé en ce que** le bloc central (17) comprend une plaque d'accouplement supérieure (27).

3. Bloc central (17) selon l'une des revendications précédentes, **caractérisé en ce que** l'au moins une plaque d'accouplement (24, 27) comprend au moins une conduite collectrice (31), laquelle relie fonctionnellement au moins un raccordement (29) à au moins un conduit de milieux (30) s'étendant dans le corps de base (23).

4. Bloc central (17) selon l'une des revendications précédentes, **caractérisé en ce que** le corps de base (23) est fabriqué à partir d'un métal léger, en particulier à partir d'aluminium, et l'au moins une plaque d'accouplement (24, 27) est fabriquée à partir d'acier à outils.

5. Bloc central (17) selon l'une des revendications précédentes, **caractérisé en ce que** le corps de base (23) du bloc central (17) est fabriqué à l'aide d'un procédé d'impression 3D.

6. Bloc central (17) selon la revendication 5, **caractérisé en ce que** le corps de base (23) comprend des cavités, lesquelles contribuent à la réduction de poids.

7. Bloc central (17) selon la revendication 5 ou 6, **caractérisé en ce que** des renforts sont insérés ou introduits dans le corps de base (23).

8. Bloc central (17) selon l'une des revendications précédentes, **caractérisé en ce que** la plaque d'accouplement inférieure (24) et/ou la plaque d'accouplement supérieure (27) sont fabriquées par un procédé d'impression 3D.

9. Bloc central (17) selon l'une des revendications précédentes, **caractérisé en ce que** la plaque d'accouplement inférieure (24) et la plaque d'accouplement supérieure (27) sont disposées de manière encastrée partiellement dans des évidements (28) prévus pour celles-ci dans un côté inférieur, ou un côté supérieur du corps de base (23).

10. Bloc central (17) selon l'une des revendications précédentes, **caractérisé en ce que** la plaque d'accouplement inférieure (24) et/ou la plaque d'accouplement supérieure (27) comprennent une ou plusieurs conduites collectrices (31), lesquelles relient fonctionnellement un ou plusieurs raccordements (29) à une ou plusieurs conduites de milieux (30).

11. Bloc central (17) selon la revendication 10, **caractérisé en ce que** le ou les plusieurs raccordements (29) sont des raccords rapides.

12. Dispositif de moulage par injection (1) doté d'un bloc central (17) pouvant tourner selon l'une des revendications précédentes et d'un dispositif de support (5) pour le bloc central (17) pouvant tourner comportant un plateau rotatif inférieur (14) pouvant tourner autour d'un axe de rotation (13) et entraîné par un moteur (15), lequel plateau rotatif est destiné à supporter le bloc central (17) pouvant tourner, et une traverse inférieure (7), laquelle est montée de façon déplaçable en direction longitudinale (x) en étant supportée par des premiers blocs de palier (8) et des rails de guidage (9) sur un bâti de machine d'une machine de moulage par injection.
